# EUROPÄISCHE PATENTSCHRIFT

(11) **EP 3 802 185 B1**
(45) Veröffentlichungstag und Bekanntmachung des Hinweises auf die Patenterteilung: **02.03.2022**
(21) Anmeldenummer: 19730669.9
(22) Anmeldetag: 23.05.2019
(51) Int. Cl.: B60K 6/405, H02K 11/215

(54) **HYBRIDMODUL UND ANTRIEBSANORDNUNG FÜR EIN KRAFTFAHRZEUG SOWIE VERFAHREN ZUR HERSTELLUNG EINES SOLCHEN HYBRIDMODULS**
HYBRID MODULE AND DRIVE ARRANGEMENT FOR A MOTOR VEHICLE, AND METHOD FOR PRODUCING A HYBRID MODEL OF SAID TYPE
MODULE HYBRIDE ET SYSTÈME D'ENTRAÎNEMENT POUR UN VÉHICULE À MOTEUR ET PROCÉDÉ DE FABRICATION D'UN TEL MODULE HYBRIDE

(30) Priorität: 25.05.2018 DE 102018112544
(43) Veröffentlichungstag der Anmeldung: 14.04.2021
(73) Patentinhaber: Schaeffler Technologies AG & Co. KG, 91074 Herzogenaurach (DE)
(72) Erfinder: WEIS, Dominik, 77815 Bühl (DE); LEHMANN, Steffen, 76275 Ettlingen (DE)
(86) Internationale Anmeldenummer: PCT/DE2019/100456
(87) Internationale Veröffentlichungsnummer: WO 2019/223837

(56) Entgegenhaltungen:
- US-A1- 2012 080 286
- US-A1- 2014 230 593
- US-B1- 6 474 428
- John Wiley ET AL: "2002 Fundamentals of Modern Manufacturing 2/e" MECHANICAL ASSEMBLY @BULLET Threaded Fasteners @BULLET Rivets and Eyelets @BULLET Assembly Methods Based on Interference Fits @BULLET Other Mechanical Fastening Methods @BULLET Molding Inserts and Integral Fasteners @BULLET Design for Assembly", , 31. Dezember 2002 (2002-12-31), XP055609173, Gefunden im Internet: URL:http://www.me.nchu.edu.tw/lab/CIM/www/ courses/Manufacturing%20Processes/Ch33-Mec hanicalAssembly-Tseng.pdf [gefunden am 2019-07-26]

## Beschreibung

Die Erfindung betrifft ein Hybridmodul für ein Kraftfahrzeug zum Ankoppeln einer Verbrennungskraftmaschine sowie eines Getriebes, umfassend eine Rotorlagesensoreinrichtung, sowie eine Antriebsanordnung für ein Kraftfahrzeug mit einer Verbrennungskraftmaschine und einem erfindungsgemäßen Hybridmodul. Darüber hinaus betrifft die Erfindung auch ein Verfahren zur Herstellung des erfindungsgemäßen Hybridmoduls.

Elektrische Maschinen zum Antreiben von Kraftfahrzeugen sind weitgehend bekannt. Hier können die elektrischen Maschinen kombiniert mit einer Verbrennungskraftmaschine vorliegen, wie zum Beispiel in einem Hybridmodul integriert, welches eine Kopplung mit einer Verbrennungskraftmaschine vorsieht. Ein Hybridmodul umfasst üblicherweise eine Anschlusseinrichtung zur mechanischen Ankopplung einer Verbrennungskraftmaschine, eine Trennkupplung, mit der Drehmoment von der Verbrennungskraftmaschine auf das Hybridmodul übertragbar ist und mit der das Hybridmodul von der Verbrennungskraftmaschine trennbar ist, eine elektrische Maschine zur Erzeugung eines Antriebsdrehmoments mit einem Rotor, sowie eine weitere Kupplungseinheit, mit der Drehmoment von der elektrischen Maschine auf einen Antriebsstrang übertragbar ist.

Jeder angeordneten Kupplung ist jeweils ein Betätigungssystem zugeordnet.

Die elektrische Maschine ermöglicht das elektrische Fahren, Leistungszuwachs zum Verbrennungsmotorbetrieb und Rekuperieren. Die Trennkupplung und deren Betätigungssystem sorgen für das Ankuppeln oder Abkuppeln des Verbrennungsmotors.

Bei derartigen Hybridmodulen werden üblicherweise der Elektromotor, die Trennkupplung, die weitere Kupplungseinheit sowie Betätigungssysteme für die Trennkupplung und die weitere Kupplungseinheit, Lager, Zwischenwellen und Gehäusekomponenten axial zwischen dem angeschlossenen Verbrennungsmotor und dem angeschlossenen Getriebe angeordnet.

Für eine optimale Betriebsweise einer elektrischen Antriebseinheit bzw. eines damit ausgestatteten Hybridmoduls ist es zudem erforderlich, in bestimmten Betriebssituationen die Winkelposition des Rotors der elektrischen Maschine festzustellen. Zu diesem Zweck werden üblicherweise Resolver und Winkellagesensoren eingesetzt, die koaxial zum Rotor eingebaut sind.

Aus dem Stand der Technik sind elektrische Maschinen für Kraftfahrzeuge bekannt, welche einen Rotor umfassen, dessen Winkelposition bestimmbar ist.

Die WO2014/131408 A2 beschreibt eine elektrische Maschine, umfassend einen Stator, einen Rotor sowie einen Rotorlagesensor. Der Rotorlagesensor dient zur Bestimmung der Winkelposition des Rotors gegenüber dem Magnetfeld des Stators und ist dabei drehfest am Stator gelagert. Weiterhin umfasst die elektrische Maschine einen am Rotor befestigten Signalgeber, wobei dieser einen Referenzgeber aufweist, welcher Referenzwerte der magnetischen Flussdichte des Rotorfeldes erfasst. Diese Referenzwerte dienen zur Ermittlung eines Winkeloffsets zwischen Signalgeber und der Lage des Rotors. Die US 2012/080286 A1 beschreibt einen Drehsensor, der einen Sensorstator, der an der Stützwand befestigt ist, und einen Sensorrotor aufweist, der radial außerhalb des Sensorstators angeordnet ist und an einer Seitenfläche des Rotorstützbauteils auf einer Seite der Stützwand befestigt ist.

Des Weiteren sind Rotorlagesensoren bekannt, welche in radial stark begrenztem Bauraum verwendet werden. Derartige Rotorlagesensoren umfassen einen Rotorlagesensor-Stator sowie einen Rotorlagesensor-Rotor, wobei üblicherweise die Rotorlagesensor-Statoren zwecks Fixierung verschraubt werden. Im Fall eines beengten radialen Bauraums muss gegebenfalls Spulenelemente verzichtet werden, um die Verschraubungen zu realisierenDies kann zu einem erhöhten elektrischen Fehler beim Abtasten der Winkelposition führen.

Demzufolge besteht die Forderung, alle Komponenten des Hybridmoduls sehr kompakt auszuführen und anzuordnen.

Hiervon ausgehend liegt der vorliegenden Erfindung die Aufgabe zugrunde, ein Hybridmodul zur Verfügung zu stellen, dass die Bestimmung der Winkelposition eines Rotationsteils des Hybridmoduls mit geringem Bauraumbedarf sowie geringem Montageaufwand kombiniert.

Die Aufgabe wird durch das erfindungsgemäße Hybridmodul nach Anspruch 1 sowie das Verfahren zur Herstellung des erfindungsgemäßen Hybridmoduls nach Anspruch 7 gelöst. Vorteilhafte Ausgestaltungen des Hybridmoduls sind in den Unteransprüchen 2 bis 6 angegeben. Ergänzend wird eine Antriebsanordnung für ein Kraftfahrzeug, welches das Hybridmodul aufweist, gemäß Anspruch 8 zur Verfügung gestellt.

Die Begriffe "radial" und "axial" beziehen sich im Rahmen der vorliegenden Erfindung immer auf die Rotationsachse des Hybridmoduls bzw. der rotierenden Bauteile des Hybridmoduls.

Die Erfindung betrifft ein Hybridmodul für ein Kraftfahrzeug zum Ankoppeln einer Verbrennungskraftmaschine sowie eines Getriebes. Das Hybridmodul umfasst dabei ein um eine Rotationsachse drehbeweglich gelagertes Rotationsteil und ein Hybridmodulgehäuse sowie eine Rotorlagesensoreinrichtung. Mittels der Rotorlagesensoreinrichtung kann eine Winkelposition des Rotationsteils in Bezug zum feststehenden Hybridmodulgehäuse festgestellt werden, wobei die Rotorlagesensoreinrichtung einen Sensor-Stator aufweist, der mechanisch fest mit dem Hybridmodulgehäuse verbunden ist. Es ist erfindungsgemäß vorgesehen, dass der Sensor-Stator mit einem ihn tragenden Bauteil verstemmt ist, wobei der Sensor-Stator mit einem ihn tragenden Bauteil verstemmt ist, wobei das den Sensor-Stator tragende Bauteil zumindest abschnittsweise eine Hohlzylinderform aufweist, wobei der Sensor-Stator an der radialen Außenseite des Hohlzylinders angeordnet ist, und die radiale Außenseite des Hohlzylinders zumindest abschnittsweise radiale Einschnitte bzw. Aussparungen aufweist, in denen zumindest abschnittsweise der Sensor-Stator angeordnet ist, und die Verstemmung dadurch realisiert ist, dass axial gegenüberliegende und den Einschnitt bzw. die Aussparung axial begrenzende Materialbereiche beidseitig axial auf den Sensor-Stator drücken.

Des Weiteren kann das Hybridmodul eine elektrische Maschine mit einem Stator und einem Rotor umfassen, wobei der Rotor gegebenenfalls auf einem Rotorträger drehbeweglich gelagert ist. Eine vom Hybridmodul ebenfalls umfasste Kupplungseinrichtung kann eine als Reibkupplung ausgestaltete Trennkupplung sein, die mit dem Rotor der elektrischen Maschine drehfest verbunden ist und mit der das Hybridmodul an einer ersten Kupplung-Seite, insbesondere einer Eingangsseite, mit einer Verbrennungskraftmaschine koppelbar ist, und an einer zweiten Kupplung-Seite, insbesondere einer Ausgangsseite, mit einem Getriebe koppelbar ist.

Vorzugsweise ist die Verstemmung im vom Hybridmodulgehäuse umgebenen Raum realisiert.

Das Rotationsteil kann gegebenenfalls ein integraler Bestandteil des Rotors der elektrischen Maschine oder fest mit diesem verbunden sein.

Das in Bezug zum Sensor-Stator drehbeweglich gelagerte Rotationsteil kann dabei fest mit einem Rotor, insbesondere einem Rotor einer elektrischen Maschine, verbunden sein und einen Signalgeber aufweisen, dessen Signal vom Sensor-Stator in einer jeweiligen Winkelposition detektierbar ist, so dass mit der Rotorlagesensoreinrichtung eine Winkelposition des Rotors der elektrischen Maschine in Bezug zum feststehenden Hybridmodulgehäuse feststellbar ist.

Die Rotationsachse des drehbeweglich gelagerten Rotationsteils sollte dabei der Rotationsachse des Sensor-Stators entsprechen.

Gemäß einem weiteren Aspekt der Erfindung kann durch die Verstemmung eine kraftschlüssige und/oder eine formschlüssige Verbindung zwischen dem tragenden Bauteil und dem Sensor-Stator realisiert sein.

In einer einfachen und stabilen Ausführungsform des erfindungsgemäßen Hybridmoduls ist das den Sensor-Stator tragende Bauteil das Hybridmodulgehäuse.

Im Gegensatz zur zuvor genannten Ausführungsform kann das den Sensor-Stator tragende Bauteil ein drehfest mit dem Hybridmodulgehäuse verbundenes Tragteil sein, mit welchem der Sensor-Stator verstemmt ist.

Nach einer bevorzugten Ausführungsform ist der Sensor-Stator im Wesentlichen ringförmig ausgestaltet ist, wobei er mittels Verstemmung an dem ihn tragenden Bauteil an seiner radialen Innenseite fixiert ist.

Die radiale Außenseite des Sensor-Stators erstreckt sich somit in radialer Richtung von der Verstemmung.

Erfindungsgemäß kann die Verstemmung in mehreren Umfangs-Abschnitten des Sensor-Stators realisiert sein, wobei durch die Verstemmung zumindest eine Spule des Sensor-Stators mechanisch fixiert ist, nämlich bei der bevorzugten abschnittsweisen Verstemmung ebenfalls nur an definierten Winkelbereichen der Spule.

Das erfindungsgemäße Hybridmodul weist den Vorteil auf, dass die Verstemmung des Sensor-Stators einen geringen Bauraumbedarf aufweist, wodurch keine Befestigungselemente mit großem Bauraumbedarf, wie z.B. Löcher für Schraubverbindungen, am Sensor-Stator realisiert werden müssen. Dennoch kann eine ausreichend stabile Befestigung des Sensor-Stators gewährleistet werden. K Zudem ist eine Verstemmung zur Fixierung des Sensor-Stators als Prozessschritt in der Montage eines erfindungsgemäßen Hybridmoduls einfacher, als beispielsweise die Herstellung einer drehfesten Verbindung des Sensor-Stators mittels mehrerer Schraubverbindungen. Insbesondere aber besteht aufgrund der Fixierung des Sensor-Stators mittels Verstemmung ein nur geringer radialer Bauraumbedarf, so dass der komplette Sensor-Stator mit seinen Spulen im Gehäuse des Hybridmoduls unterbringbar ist, ohne Platz für weitere Befestigungsmittel zu benötigen und demzufolge Interferenzen von Befestigungsmitteln mit Spulen der Sensor-Stators hinnehmen zu müssen.

Zur Lösung der erfindungsgemäßen Aufgabe wird zudem ein Verfahren zur Herstellung eines erfindungsgemäßen Hybridmoduls zur Verfügung gestellt.

Bei dem erfindungsgemäßen Verfahren werden ein Hybridmodulgehäuse sowie ein um eine Rotationsachse drehbeweglich gelagertes Rotationsteil und eine Rotorlagesensoreinrichtung bereitgestellt. Die Rotorlagesensoreinrichtung wird mit einem Sensor-Stator mechanisch fest mit dem Hybridmodulgehäuse verbunden, wobei der Sensor-Stator mit einem ihn tragenden Bauteil verstemmt wird.

Das den Sensor-Stator tragende Bauteil kann dabei ein Bestandteil des Hybridmodulgehäuses oder auch ein drehfest mit dem Hybridmodulgehäuse verbundenes Bauteil sein. Entsprechend kann die mechanische feste Verbindung des Sensor-Stators mit dem Hybridmodulgehäuse unmittelbar oder mittelbar realisiert sein.

Das in Bezug zum Sensor-Stator drehbeweglich gelagerte Rotationsteil kann dabei fest mit einem Rotor, insbesondere einem Rotor einer elektrischen Maschine, verbunden sein und einen Signalgeber aufweisen, dessen Signal vom Sensor-Stator in einer jeweiligen Winkelposition detektierbar ist, sodass mit der Rotorlagesensoreinrichtung eine Winkelposition des Rotors in Bezug zum feststehenden Hybridmodulgehäuse feststellbar ist.

Die Rotationsachse des drehbeweglich gelagerten Rotationsteils sollte dabei der Rotationsachse des Sensor-Stators entsprechen.

Des Weiteren wird erfindungsgemäß eine Antriebsanordnung für ein Kraftfahrzeug zur Verfügung gestellt, die ein erfindungsgemäßes Hybridmodul, ein Antriebsaggregat, insbesondere eine Verbrennungskraftmaschine, sowie ein Getriebe aufweist, wobei das Hybridmodul mit dem Antriebsaggregat und dem Getriebe mechanisch über wenigstens eine Kupplungseinrichtung des Hybridmoduls verbunden oder verbindbar ist.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
Fig. 1: der Sensor-Stator verstemmt mit einem ihn tragenden Bauteil in einer perspektivischen Ansicht.
Fig. 2: der Sensor-Stator verstemmt mit einem ihn tragenden Bauteil in einer Schnittansicht.

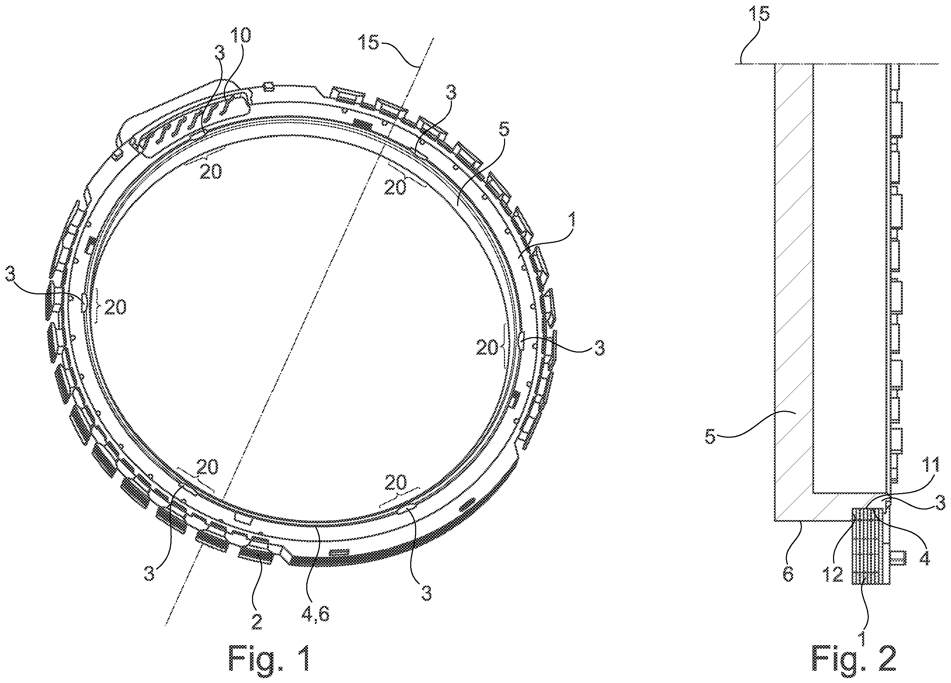

In Fig. 1 ist der Sensor-Stator 1 verstemmt mit einem ihn tragenden Bauteil in einer perspektivischen Vorderansicht gezeigt. Das ihn tragende Bauteil ist hier ein Tragteil 5, welches radial innerhalb des Sensor-Stators 1 angeordnet ist. Weiterhin dargestellt ist die Rotationsachse 15 des Sensor-Stators 1, um welchen dieser sowie das Tragteil 5 rotieren. Der Sensor-Stator 1 sowie das Tragteil 5 sind im Wesentlichen ringförmig ausgestaltet, wobei der Sensor-Stator 1 mittels Verstemmungen 3 an dem Tragteil 5 an seiner radialen Innenseite 4 fixiert ist, wodurch das Tragteil 5 koaxial zum Sensor-Stator 1 angeordnet ist. Die Fixierung wird dabei über mehrere Verstemmungen 3 bzw. verstemmte Bereiche realisiert, welche vom Tragteil 5 auf dessen radialer Außenseite 6 ausgebildet sind und zumindest gleichmäßig zueinander beabstandet angeordnet sind. Dabei ist eine jeweilige Verstemmung 3 in einem Umfangs-Abschnitt 20 des Sensor-Stators 1 realisiert.

Der Sensor-Stator 1 umfasst mehrere Spulenelemente 2 sowie eine Anschlusseinrichtung 10 zur Kontaktierung einer Signal-Übermittlungseinheit. Ein jeweiliges Spulenelement 2 erstreckt sich dabei auf der radialen Außenseite des Sensor-Stators 1 in Richtung nach radial außen. Die Spulenelemente 2 sind dabei eng zueinander beabstandet und auf Umfangs-Segmenten des Sensor-Stators 1 angeordnet. Die Anschlusseinrichtung 10 ist, äquivalent zu der Anordnung der Spulenelemente 2, ebenfalls auf der radialen Außenseite des Sensor-Stators 1 angeordnet. Dabei ist die Anschlusseinrichtung 10, am Umfang zwischen zwei Spulenelementen 2 positioniert. Die Anschlusseinrichtung 10 ist mit den Spulenelementen 2 steuerungstechnisch verbunden, so dass Signale von den Spulenelementen 2 über die Anschlusseinrichtung 10 übermittelt werden können. Somit kann ein an die Anschlusseinrichtung 10 angeschlossenes Steuerelement mit Hilfe des Sensor-Stators 1 die Rotorlage erfassen und eine elektrische Maschine entsprechend ansteuern.

Fig. 2 zeigt den Sensor-Stator 1 verstemmt mit einem ihn tragenden Bauteil in einer geschnittenen Teil-Seitenansicht. Die Seitenansicht des Sensor-Stators 1 ist dabei in radialer Richtung durch die Rotationsachse 15 begrenzt. Das tragende Bauteil ist wie in Figur 1 ebenfalls ein Tragteil 5, welches radial innerhalb des Sensor-Stators 1 koaxial zu diesem angeordnet ist. Das Tragteil 5 weist abschnittsweise eine Hohlzylinderform sowie eine Vollzylinderform auf. Der Abschnitt des Hohlzylinders ist dabei in Richtung des Sensor-Stators 1 ausgerichtet, wobei der Vollzylinder-Abschnitt sich auf der vom Sensor-Stator 1 abgewandten Seite des Tragteils 5 befindet. Der Abschnitt des Hohlzylinders bildet dabei am axialen Ende seines Hohlzylindermantels auf seiner radialen Außenseite 6 Einschnitte 11 aus. Ein jeweiliger Einschnitt 11 ist dabei axial durch Materialbereiche 12 begrenzt. Der Sensor-Stator 1 ist mit seiner radialen Innenseite 4 im Einschnitt 11 positioniert, wobei die Materialbereiche 12 beidseitig axial auf den Sensor-Stator 1 drücken und ihn so in einem jeweiligen Einschnitt 11 verstemmen.

Mit dem erfindungsgemäßen Hybridmodul kann zuverlässig die Bestimmung einer Winkelposition eines Rotationsteils eines Hybridmoduls mit geringem Bauraumbedarf sowie Montageaufwand kombiniert werden.

### Bezugszeichenliste

- 1: Sensor-Stator
- 2: Spulenelement
- 3: Verstemmung
- 4: radiale Innenseite des Sensor-Stators
- 5: Tragteil
- 6: radiale Außenseite des Tragteils
- 10: Anschlusseinrichtung
- 11: Einschnitt
- 12: Materialbereich
- 15: Rotationsachse des Sensor-Stators
- 20: Umfangs-Abschnitt

## Patentansprüche

1. Hybridmodul für ein Kraftfahrzeug zum Ankoppeln einer Verbrennungskraftmaschine sowie eines Getriebes, umfassend ein um eine Rotationsachse (15) drehbeweglich gelagertes Rotationsteil und ein Hybridmodulgehäuse sowie eine Rotorlagesensoreinrichtung, mit der eine Winkelposition des Rotationsteils in Bezug zum feststehenden Hybridmodulgehäuse feststellbar ist, wobei die Rotorlagesensoreinrichtung einen Sensor-Stator (1) aufweist, der mechanisch fest mit dem Hybridmodulgehäuse verbunden ist, **dadurch gekennzeichnet,**
**dass** der Sensor-Stator (1) mit einem ihn tragenden Bauteil verstemmt ist, wobei das den Sensor-Stator (1) tragende Bauteil zumindest abschnittsweise eine Hohlzylinderform aufweist, wobei der Sensor-Stator (1) an der radialen Außenseite (6) des Hohlzylinders angeordnet ist, und
die radiale Außenseite des Hohlzylinders zumindest abschnittsweise radiale Einschnitte (11) bzw. Aussparungen aufweist, in denen zumindest abschnittsweise der Sensor-Stator (1) angeordnet ist, und die Verstemmung dadurch realisiert ist, dass axial gegenüberliegende und den Einschnitt (11) bzw. die Aussparung axial begrenzende Materialbereiche (12) beidseitig axial auf den Sensor-Stator (1) drücken.

2. Hybridmodul nach Anspruch 1,
**dadurch gekennzeichnet,**
**dass** durch die Verstemmung eine kraft- und/oder formschlüssige Verbindung zwischen dem tragenden Bauteil und dem Sensor-Stator (1) realisiert ist.

3. Hybridmodul nach einem der Ansprüche 1 und 2,
**dadurch gekennzeichnet,**
**dass** das den Sensor-Stator (1) tragende Bauteil das Hybridmodulgehäuse ist.

4. Hybridmodul nach einem der Ansprüche 1 und 2,
**dadurch gekennzeichnet,**
**dass** das den Sensor-Stator (1) tragende Bauteil ein drehfest mit dem Hybridmodulgehäuse verbundenes Tragteil (5) ist, mit welchem der Sensor-Stator (1) verstemmt ist.

5. Hybridmodul nach einem der vorangegangenen Ansprüche,
**dadurch gekennzeichnet,**
**dass** der Sensor-Stator (1) im Wesentlichen ringförmig ausgestaltet ist, wobei er mittels Verstemmung an dem ihn tragenden Bauteil an seiner radialen Innenseite (4) fixiert ist.

6. Hybridmodul nach einem der vorangegangenen Ansprüche,
**dadurch gekennzeichnet,**
**dass** die Verstemmung in mehreren Umfangs-Abschnitten (20) des Sensor-Stators (1) realisiert ist.

7. Verfahren zur Herstellung eines Hybridmoduls gemäß einem der Ansprüchen 1 bis 6, bei dem ein Hybridmodulgehäuse sowie ein um eine Rotationsachse (15) drehbeweglich gelagertes Rotationsteil und eine Rotorlagesensoreinrichtung zur Verfügung gestellt werden, und die Rotorlagesensoreinrichtung mit einem Sensor-Stator (1) mechanisch fest mit dem Hybridmodulgehäuse verbunden wird, wobei der Sensor-Stator (1) mit einem ihn tragenden Bauteil verstemmt wird.

8. Antriebsanordnung, umfassend ein Hybridmodul nach einem der Ansprüche 1 bis 6 sowie ein Antriebsaggregat, insbesondere eine Verbrennungskraftmaschine, sowie ein Getriebe, wobei das Hybridmodul mit dem Antriebsaggregat und dem Getriebe mechanisch über wenigstens eine Kupplungseinrichtung des Hybridmoduls verbunden oder verbindbar ist.

## Claims

1. A hybrid module for a motor vehicle for coupling an internal combustion engine and a transmission, comprising a rotary part, rotatably mounted about an axis of rotation (15), and a hybrid module housing and a rotor position sensor device, with which an angular position of the rotary part can be determined in relation to the stationary hybrid module housing, wherein the rotor position sensor device has a sensor stator (1) which is mechanically rigidly connected to the hybrid module housing, **characterised in that**
the sensor stator (1) is caulked with a component that supports it, wherein the component supporting the sensor stator (1) has, at least in sections, a hollow cylinder shape, wherein the sensor stator (1) is arranged on the radial outer side (6) of the hollow cylinder, and
the radial outer side of the hollow cylinder has, at least in sections, radial incisions (11) or recesses, in which, at least in sections, the sensor stator (1) is arranged, and the caulking is realised **in that** axially opposite material areas (12) axially delimiting the incision (11) or the recess press axially on both sides on the sensor stator (1).

2. The hybrid module according to claim 1,
**characterised in that**
the caulking creates a non-positive and/or positive connection between the supporting component and the sensor stator (1).

3. The hybrid module according to one of claims 1 and 2,
**characterised in that**
the component supporting the sensor stator (1) is the hybrid module housing.

4. The hybrid module according to one of claims 1 and 2,
**characterised in that**
the component supporting the sensor stator (1) is a support part (5) which is non-rotatably connected to the hybrid module housing and with which the sensor stator (1) is caulked.

5. The hybrid module according to one of the preceding claims,
**characterised in that**
the sensor stator (1) is designed to be substantially ring-shaped, wherein it is fixed by means of caulking on its radial inside (4) to the component supporting it.

6. The hybrid module according to one of the preceding claims,
**characterised in that**
the caulking is realised in several circumferential sections (20) of the sensor stator (1).

7. A method for producing a hybrid module according to one of claims 1 to 6, in which a hybrid module housing and a rotating part, rotatably mounted about an axis of rotation (15), and a rotor position sensor device are provided, and the rotor position sensor device with a sensor stator (1) is mechanically rigidly connected to the hybrid module housing, wherein the sensor stator (1) is caulked with a component supporting it.

8. A drive arrangement comprising a hybrid module according to one of claims 1 to 6 and a drive unit, in particular an internal combustion engine, and a transmission, wherein the hybrid module is mechanically connected or connectable to the drive unit and the transmission via at least one coupling device of the hybrid module.

## Revendications

1. Module hybride pour un véhicule à moteur permettant de coupler un moteur à combustion interne, ainsi qu'une boîte de vitesses, comprenant une partie rotative montée mobile en rotation autour d'un axe de rotation (15) et un boîtier de module hybride, ainsi qu'un dispositif de détection de la position du rotor, avec lequel une position angulaire de la partie rotative peut être fixée par rapport au boîtier de module hybride fixe, dans lequel le dispositif de détection de la position du rotor comporte un capteur-stator (1), lequel est relié mécaniquement de manière fixe au boîtier de module hybride, **caractérisé en ce**
**que** le capteur-stator (1) est maté avec un composant le portant, dans lequel le composant porteur du capteur-stator (1) présente au moins par sections une forme de cylindre creux, dans lequel le capteur-stator (1) est disposé sur le côté extérieur (6) radial du cylindre creux et
le côté extérieur radial du cylindre creux comporte au moins par sections des entailles (11) ou des évidements radiaux, dans lesquels est disposé au moins par sections le capteur-stator (1) et le matage est réalisé par le fait que des zones de matériau (12) axialement opposées et délimitant axialement l'entaille (11) ou l'évidement appuient axialement des deux côtés sur le capteur-stator (1).

2. Module hybride selon la revendication 1,
**caractérisé en ce**
**que** le matage permet de réaliser une liaison par complémentarité de force ou de forme entre le composant porteur et le capteur-stator (1).

3. Module hybride selon l'une quelconque des revendications 1 et 2,
**caractérisé en ce**
**que** le composant porteur du capteur-stator (1) est le boîtier de module hybride.

4. Module hybride selon l'une quelconque des revendications 1 et 2,
**caractérisé en ce**
**que** le composant porteur du capteur-stator (1) est une pièce de support (5) reliée de manière solidaire en rotation au boîtier de module hybride, avec laquelle le capteur-stator (1) est maté.

5. Module hybride selon l'une quelconque des revendications précédentes,
**caractérisé en ce**
**que** le capteur-stator (1) est réalisé sensiblement en forme d'anneau, dans lequel il est fixé par matage sur le composant le portant, sur son côté intérieur (4) radial.

6. Module hybride selon l'une quelconque des revendications précédentes,
**caractérisé en ce**
**que** le matage est réalisé dans plusieurs sections périphériques (20) du capteur-stator (1).

7. Procédé de fabrication d'un module hybride selon l'une quelconque des revendications 1 à 6, selon lequel un boîtier de module hybride, ainsi qu'une partie rotative montée mobile en rotation autour d'un axe de rotation (15) et un dispositif de détection de position du rotor sont fournis et le dispositif de détection de position du rotor est relié mécaniquement de manière fixe au boîtier de module hybride avec un capteur-stator (1), dans lequel le capteur-stator (1) est maté avec un composant le portant.

8. Système d'entraînement, comprenant un module hybride selon l'une quelconque des revendications 1 à 6, ainsi qu'un groupe d'entraînement, en particulier un moteur à combustion interne, ainsi qu'une boîte de vitesses, dans lequel le module hybride est relié ou peut être relié mécaniquement au groupe d'entraînement et à la boîte de vitesses par au moins un dispositif d'accouplement du module hybride.
